Europäisches Patentamt

European Patent Office

Office européen des brevets

(11) Veröffentlichungsnummer: **0 176 011 B1**

## (12) EUROPÄISCHE PATENTSCHRIFT

(45) Veröffentlichungstag der Patentschrift: **22.01.92**

(21) Anmeldenummer: **85111549.3**

(22) Anmeldetag: **12.09.85**

(51) Int. Cl.⁵: **C08L 77/00**, C08L 51/04

Die Akte enthält technische Angaben, die nach dem Eingang der Anmeldung eingereicht wurden und die nicht in dieser Patentschrift enthalten sind.

(54) **Verfahren zur Herstellung von Poliamidformmassen verbesserter Verarbeitungsstabilität.**

(30) Priorität: **22.09.84 DE 3434820**

(43) Veröffentlichungstag der Anmeldung:
**02.04.86 Patentblatt 86/14**

(45) Bekanntmachung des Hinweises auf die Patenterteilung:
**22.01.92 Patentblatt 92/04**

(84) Benannte Vertragsstaaten:
**BE CH DE FR GB IT LI NL**

(56) Entgegenhaltungen:
EP-A- 0 034 748    EP-A- 0 056 242
EP-A- 0 056 244    EP-A- 0 134 937
EP-A- 0 141 107    DE-A- 2 742 176
DE-A- 3 117 052    DE-A- 3 200 070

(73) Patentinhaber: **BAYER AG**

**W-5090 Leverkusen 1 Bayerwerk(DE)**

(72) Erfinder: **Trabert, Ludwig, Dr.**
**Leydelstrasse 67**
**W-4150 Krefeld(DE)**
Erfinder: **Lindner, Christian, Dr.**
**Riehlerstrasse 200**
**W-5000 Köln 60(DE)**
Erfinder: **Binsack, Rudolf, Dr.**
**Bethelstrasse 4a**
**W-4150 Krefeld(DE)**
Erfinder: **Haupt, Heinrich, Dr.**
**Bodelschwinghstrasse 15**
**W-4150 Krefeld(DE)**
Erfinder: **Füllmann, Heinz-Josef, Dr.**
**Am Schneeberg 31**
**W-5653 Leichlingen 2(DE)**
Erfinder: **Merten, Josef, Dr.**
**Krünsend 30**
**W-4052 Korschenbroich(DE)**

EP 0 176 011 B1

**Beschreibung**

Die Erfindung betrifft Formmassen aus Polyamiden und gepfropften Acrylsäureestern.

Polyamidformmassen zeichnen sich aufgrund ihrer wertvollen technologischen Eigenschaften, wie z.B. Steifigkeit, Zähigkeit, Spannungskorrosions- und Lösungsmittelbeständigkeit aus. Für viele Anwendungen reichen jedoch die Zähigkeit, insbesondere die Schlagzähigkeit der Formkörper bei mehraxialer Belastung nicht aus.

Aus der DE-OS 2 742 176 ist bekannt, daß man die Kerbschlagzähigkeit von Polyamiden durch Zusatz von 5 bis 40 Gew.-% eines vernetzten Pfropfpolymerisates beträchtlich steigern kann. Als Pfropfpolymerisate werden mit Estern der Methacrylsäure gepfropfte vernetzte Polybutadiene empfohlen. Die Pfropfpolymerisate sind im Polyamidformkörper mit einer Teilchengröße > 0,1 $\mu$m, vorzugsweise > 0,2 $\mu$m dispergiert.

Pfropfpolymerisate aus Polybutadien als Pfropfgrundlage bauen ab aufgrund der reaktionsfähigen Doppelbindungen;

Pfropfpolymerisate auf Polyacrylatbasis besitzen diesen Nachteil nicht, lassen sich aber nur schwierig verteilen. Polyamidformkörper, die die Pfropfpolymerisate überwiegend in Teilchengrößen über 3 $\mu$m enthalten, zeigen keine ausreichende Zähigkeit. Zwar kann durch Einwirkung hoher Scherkräfte eine bessere Verteilung erreicht werden, man riskiert dabei aber einen teilweisen Abbau des Polyamids, was wiederum zu einer Verschlechterung der Eigenschaften führt.

Außerdem ist bekannt, daß ein in einer Polyamid-Matrix bereits homogen verteilter Kautschuk während der thermoplastischen Verarbeitung zur Agglomerisation neigt; eine Erscheinung, die bei Polyacrylatkautschuken ausgeprägter ist als bei Polybutadienkautschuken.

Aus der DE 3117052 ist es bekannt, Polyestermischungen hoher Zähigkeit dadurch herzustellen, daß man ein Pfropfpolymerisat aus einem vollständig gebrochenen Latex eines Acrylatkautschuks und copolymerisierbaren Monomeren in thermoplastischen Polyestern einarbeitet und dabei Teilchen des Pfropfpolymerisats mit relativ kleinen Durchmessern erhält.

Es war daher Aufgabe der vorliegenden Erfindung, nicht nur Polyacrylsäureester mit geringer Agglomerisationsneigung und guter Verteilbarkeit in Polyamiden bereitzustellen sondern auch Pfropfprodukte zu finden, deren Teilchen auch längere Verarbeitungszeiten bei erhöhter Temperatur, wie sie z.B. bei der Compoundierung im Extruder und bei der Spritzgußverarbeitung von glasfaserhaltigen Compounds auftreten können, ohne Teilchenvergrößerung auf über 3 um überstehen; diese erwünschte Eigenschaft wird nachfolgend kurz als "Verarbeitungsstabilität" bezeichnet.

Die aus der DE-OS 3 200 070 und der DE-OS 2 144 528 bekannten Mischungen aus Polyamid und Kautschuk-elastischen Pfropfpolymerisaten und Polyacrylatbasis zeigen nicht das gewünschte Eigenschaftsbild.

Überraschenderweise wurde nun gefunden, daß durch Pfropfpolymerisation von Monomeren in Abwesenheit von Suspendiermittel auf den vollständig gebrochenen und in Wasser aufgeschlämmten Latex eines Acrylatkautschuks ein pulverförmiges Pfropfpolymerisat entsteht, das in üblicher Weise in Polyamiden nicht nur ohne Teilchenvergrößerung außergewöhnlich fein verteilbar ist, sondern auch ohne Teilchenvergrößerung auch längere Verarbeitungszeiten bei höherer Temperatur übersteht.

Da Begriff "außergewöhnlich fein verteilt bzw. außergewöhnlich niedrige Teilchengröße" beinhaltet, daß Anzahl, Form und Größe der einzusetzenden Pfropfpolymerisatteilchen mit Anzahl, Form und Größe der im geschmolzenen Polyamid eingebrachten Pfropfpolymerisatteilchen auch nach dem Homogenisieren im wesentlich noch übereinstimmen.

Gegenstand der Erfindung sind Verfahren zur Herstellung von Polyamidformmassen verbesserter Verarbeitungsstabilität durch Vermischen von

A) 55 - 99, vorzugsweise 70 bis 98, besonders bevorzugt 75 - 97 Gew.-%, bezogen auf die Summe der Komponenten A und B, eines Polyamids und

B) 1 bis 45, vorzugsweise 2 bis 30, besonders bevorzugte 3 bis 25 Gew.-%, bezogen auf die Summe der Komponenten A und B, eines pulverförmigen Pfropfpolymerisats aus

a) 60 bis 98, vorzugsweise 70 bis 95 Gew.-%, bezogen auf B, Acrylatkautschuk aus einem Polydien-Kern und aufgepfropften Acrylateinheiten, mit einer Glasübergangstemperatur < 0 $^{\circ}$C, bestimmt durch Schubmodulmessungen, als Pfropfgrundlage und

b) 2 bis 40, vorzugsweise 5 bis 30 Gew.-%, bezogen auf B, mindestens eines ethylenisch ungesättigten Monomeren, dessen bzw. deren in Abwesenheit von a) entstandenen Homo- bzw. Copolymerisate eine Glasübergangstemperatur > 25 $^{\circ}$C aufweisen, als Pfropfmonomeres,

und

C) üblichen Additiven wie Gleit- und Entformungsmittel, Nucleierungsmittel, Stabilisatoren, Füll-und Verstärkungsstoffe, Flammschutzmittel sowie Farbstoffe, wobei das Pfropfpolymerisat B durch Aufpfropfen der Pfropfmonomeren b) auf den aus Emulsion durch Elektrolyte, Säuren, Basen, Temperatur oder mechanische Einwirkung vollständig gebrochenen bzw. koagulierten und in Wasser augeschlämmten Latex von a) in Abwesenheit von Suspendiermittel hergestellt wurde und die mittlere Teilchengröße des Pfropfpolymerisats (B) in dem Polyamid A) 0,05 bis 3 $\mu$m beträgt. und wobei eine Mischung von Acrylatkautschuk-Latexteilchen a) unterschiedlich hergestellter Latices mit definierter bimodaler Latexgrößenverteilungen, aus

$\alpha$) 20 - 80 Gew.-%, bezogen auf die Summe ($\alpha + \beta$),eines Kautschuklatex mit einem Teilchendurchmesser $d_{50}$ von 0,05 - 0,19 $\mu$m und

$\beta$) 80 - 20 Gew.%, bezogen auf die Summe ($\alpha + \beta$), eines Kautschuklatex mit einem Teilchendurchmesser $d_{50}$ von 0,20 - 1,0 $\mu$m, mit der Maßgabe, daß $d_{50}$ ($\beta$) um den Faktor 1,5-8 größer ist als $d_{50}$ -($\alpha$),

der Quotient Q = ($d_{90}$-$d_{10}$)/$d_{50}$ der einzelnen Kautschuke jeweils höchstens 2

und die Differenz $d_{10}$ ($\beta$) - $d_{90}$ ($\alpha$) 0,01 - 0,10 betragen,

ausgeschlossen wird.

Das anfallende pulverförmige Pfropfpolymerisat B kann anschließend getrocknet und im gewünschten Verhältnis mit dem Polyamid A so homogenisiert werden, daß die mittlere Teilchengröße von B in A 0,05 bis 3, vorzugsweise 0,1 bis 2, besonders bevorzugt 0,1 bis 1 $\mu$m beträgt.

Als Polyamide A eigenen sich alle thermoplastischen Polyamide, vorzugsweise teilkristalline Polyamide. Insbesondere kommen als teilkristalline Polyamide Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m-und/oder p-Xylylendiamin und/oder Hexamethylendiamin und/oder 2,2,4-Trimethylhexamethylendiamin und/oder 2,4,4-Trimethylhexamethylendiamin und/oder Isophorondiamin besteht und deren Zusammensetzung aus dem Stand der Technikbekannt ist.

Außerdem sind Polyamide zu nennen, die ganz oder teilweise aus Lactamen mit 6 - 12 C-Atomen, gegebenenfalls unter Mitverwendung einer oder mehrerer der obengenannten Ausgangskomponenten, hergestellt werden.

Besonders bevorzugte teilkristalline Polyamide sind Polyamid-6, Polyamid-6,6 und entsprechende Copolyamide.

Die Polyamide sollten vorzugsweise eine relative Viskosität (gemessen an einer 1 gew.-%igen Lösung in m-Kresol bei 25 °C) von 2,0 - 5,0, besonders bevorzugt von 2,5 bis 4,0 aufweisen.

Die Acrylatkautschuke B (a) sind vorzugsweise Polymerisate aus Acrylsäureestern mit gegebenenfalls bis zu 40 Gew.-% anderer polymerisierbarer, ethylenisch ungesättigter Monomerer. Sofern die als Pfropfgrundlage (a) eingesetzten Acrylatkautschuke ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$-$C_8$-Alkylester, beispielsweise Methyl-, Ethyl-, Butyl-, Octyl- und 2-Ethylhexylester; Halogenalkylester, vorzugsweise Halogen-$C_1$-$C_8$-alkylester, wie Chlorethylacrylat, und aromatische Ester wie Benzylacrylat und Phenylethylacrylat. Sie können einzeln oder in Mischung eingesetzt werden.

Die Acrylatkautschuke (a) können unvernetzt, vernetzt, vorzugsweise partiell vernetzt sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigten Polyolen mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat und -isocyanurat, Tris-acryloyl-s-triazine, insbesondere Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2, Gew.-%, bezogen auf Pfropfgrundlage (a).

Bei cyclischen vernetzenden Monomeren mit mindestens drei ethylenisch ungesättigten Gruppen ist es vorteilhaft, die Menge auf < 1 Gew.-% der Pfropfgrundlage (a) zu beschränken.

Bevorzugte "andere" polymerisierbare ethylenisch ungesättigte Monomere, die neben den Acrylsäureestern gegebenenfalls zur Herstellung der Pfropfgrundlage (a) dienen können, sind z.B. Acrylnitril, Styrol, $\alpha$-Methylstyrol, Acrylamide, Vinyl-$C_1$-$C_6$-alkylether. Bevorzugte Acrylatkautschuke als Pfropfgrundlage (a) sind

EP 0 176 011 B1

Emulsionspolymerisate, die einen Gelgehalt von ≧ 60 Gew.-% aufweisen.

Der Gelgehalt der Pfropfgrundlage (a) wird bei 25°C in Dimethylformamid bestimmt (M. Hoffmann, H. Krömer, R. Kuhn, Polymeranalytik I und II, Georg Thieme Verlag, Stuttgart 1977).

Als Pfropfgrundlage (a) können auch solche Acrylatkautschuke verwendet werden, die als wäßrige Emulsion (Latex) anfallen und deren Latexpartikel 1 bis 20 Gew.-%, vorzugsweise 1 bis 10 Gew.-%, bezogen auf (a), bereits in wäßriger Emulsion aufgepfropfte Monomere enthalten, deren Homo- bzw. Copolymerisate Glastemperaturen > 0°C aufweisen.

Bevorzugte derartige aufzupfropfende Monomere sind Alkylacrylate, Alkylmethacrylate, Styrol, Acrylnitril, $\alpha$-Methylstyrol und/oder Vinylacetat.

Die Pfropfgrundlagen (a) werden z.B. durch Emulsionspolymerisation oder Emulsionspfropfpolymerisation hergestellt. Man kann sie aber auch so herstellen, daß man einen Acrylatkautschuk in Lösung oder Masse herstellt, dann die Pfropfmonomeren aufpropft und anschließend diese Kautschuke in eine wäßrige Emulsion, die sich für weitere Pfropfverfahren eignet, überführt.

Acrylatkautschuke als Pfropfgrundlage (a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage (a) kann 0,1 bis 80, bevorzugt 10 bis 50 Gew.-%, bezogen auf (a), betragen. Schale und Kern können unabhängig voneinander unvernetzt, teilvernetzt oder hochvernetzt sein.

Bevorzugte Pfropfgrundlagen (a) sind daher Acrylatkautschuke mit wenigstens 20 Gew.-% Acrylateinheiten, die aus folgender Gruppe ausgewählt werden können:

1. Polyacrylsäureesterhomo- und -co-polymerisate,
2. Polyacrylsäureesterhomo- und -co-polymerisate, die einen Dienkautschukkern enthalten,
3. in wäßriger Emulsion hergestellte Pfropfpolymerisate aus Polyacrylsäureesterhomo- oder -co-polymerisaten, die gegebenenfalls einen Dienkautschukkern enthalten, und ethylenisch ungesättigten polymerisierbaren Monomeren.

Die Pfropfausbeute, d.h. der Quotient aus der Menge des aufgepfropften Monomeren (b) und der Menge des eingesetzten Pfropfmonomeren (b), beträgt in der Regel 20 bis 80 Gew.-%. Die Bestimmung kann wie bei M. Hoffmann, H. Krömer, R. Kuhn, Polymeranalytik, Band 1, Georg Thieme Verlag, Stuttgart 1977, beschrieben, erfolgen.

Bevorzugte Pfropfmonomere (b) sind $\alpha$-Methylstyrol, Styrol, Acrylnitril, Methylmethacrylat oder Mischungen dieser Monomeren. Bevorzugte Pfropfmonomer-Mischungen sind solche aus Styrol und Acrylnitril im Gewichtsverhältnis 90:10 bis 50:50; bevorzugtes Pfropfmonomeres ist Methylmethacrylat.

Die pulverförmigen Pfropfpolymerisate B können, wie folgt hergestellt werden:
Zunächst werden die Monomeren der Pfropfgrundlage (a) in an sich bekannter Weise in Gegenwart radikalbildender Initiatoren in Emulsion polymerisiert, so daß Teilchen mit einem mittleren Teilchendurchmesser $d_{50}$ von 0,05 bis 3 $\mu$m entstehen. Man kann das Monomerengemisch zu Beginn oder im Verlauf der Polymerisation kontinuierlich oder teilkontinuierlich in das Polymerisationssystem einbringen.

Soll als Pfropfgrundlage (a) ein vernetzter Acrylatkautschuk mit einem vernetzten Dienkautschuk als Kern eingesetzt werden, so stellt man zunächst den Dienkautschuk durch Emulsionspolymerisation eines konjugierten Diens in Latexform her. Dann werden ebenfalls in wäßriger Emulsion die Pfropfmonomeren in dem Dienkautschuklatex emulgiert und in an sich bekannter Weise in Gegenwart radikalbildender Initiatoren polymerisiert. Die so entstehende Acrylatkautschukhülle kann durch Mitverwendung von vernetzenden Monomeren bereits bei der Herstellung vernetzt werden.

Bei dieser Herstellung einer bereits in Emulsion partiell gepfropften Pfropfgrundlage (a) muß die Bildung neuer Teilchen möglichst vollständig unterbunden werden. Ein Emulsionsstabilisator muß in einer zur Oberflächenbedeckung der Teilchen erforderlichen Menge vorhanden sein. Die Größe dieser Teilchen ist durch die Reaktionsführung in weiten Grenzen zu variieren. Verwendet man als Polydien-Kern einen agglomerierten Latex, um große Teilchen zu erhalten, so können die Acrylatkautschukteilchen mehrere Dienkautschukkerne enthalten. Man kann die Polymerisation des Acrylatkautschuks auch so führen, daß nebeneinander Acrlyatkautschukteilchen ohne und mit Dienkautschukkern erzeugt werden. Auch solche Mischungen können unter besonderen Umständen als Pfropfgrundlage (a) dienen.

Soll als Pfropfgrundlage (a) ein bereits gepfropfter Kautschuk dienen, so muß zunächst eine wäßrige Aufschlämmung dieses gepfropften Kautschuks hergestellt werden.

Im Anschluß an die Herstellung der Pfropfgrundlage (a) wird diese Emulsion vollständig gebrochen bzw. koaguliert, z.B. durch Elektrolyten, Säuren, Basen, mechanische Einwirkung oder Temperatur. Bevorzugt arbeitet man mit wäßrigen Lösungen von Säuren und/oder Salzen bei erhöhten Temperaturen, insbesonde-

4

re bei Temperaturen zwischen 30°C und 100°C. Dadurch wird eine heterogene Aufschlämmung des Polymerisats in Form diskreter Polymerisatpartikel unterschiedlichster Form und Größe in wäßriger Phase erhalten. Die Partikelcharakteristiken lassen sich im Koagulationsmedium durch Variation der Fällungsparameter beeinflussen.

Durch Rühren dieser Aufschlämmungen wird das Verfahren günstig beeinflußt.

Nachdem die Polymerisataufschlämmung im wäßrigen Koagulationsmedium erzeugt wurde, werden nun, vorzugsweise im Temperaturbereich von ca. 30 - 100°C, die Pfropfmonomeren (b), gegebenenfalls in Kombination mit Reglern, Radikalinitiatoren (insbesondere wasserlöslichen Persulfaten) oder Antioxidantien, in die bewegte Polymerisataufschlämmung eingebracht und radikalisch polymerisiert. Dabei ist der Zusatz von Suspendiermitteln zu vermeiden.

Anschließend wird das Pfropfpolymerisat B isoliert, z.B. durch Filtration oder Zentrifugieren, und danach getrocknet. Das Verfahren eignet sich für dis-, halb- oder vollkontinuierliche Fahrweise.

Die Pfropfpolymerisate B sind nach Isolierung und Trocknung lagerbeständige, rieselfähige, nichtklebende Pulver, die in einfacher Weise zur Mischung mit den Polyamiden A mit üblichen Pulver-Förderaggregaten dosiert werden können. Ein besonderer Vorteil ist die ohne große Schereinwirkung hervorragende Dispergierfähigkeit der Pfropfprodukte B im geschmolzenen Polyamid A.

Wenn die erfindungsgemäß zu verwendenden Pfropfpolymerisate B Anteile von Polymerisat enthalten, das durch Polymerisation nicht gepfropfter Anteile der Pfropfmonomeren (b) entstanden ist, soll unter "Pfropfpolymerisat B" - unabhängig vom Pfropfgrad - die Summe der Reaktionsprodukte verstanden werden, die durch Polymerisation der Pfropfmonomeren (b) in Anwesenheit der Pfropfgrundlage (a) entstehen.

Die mittlere Teilchengröße $d_{50}$ ist der Durchmesser, oberhalb und unterhalb dessen jeweils 50 Gew.-% der dispergierten Teilchen liegen. Er kann bestimmt werden mittels Ultrazentrifugen-Messungen (W. Scholtan, H. Lange, Kolloid. Z. und Z. Polymere 250 (1972), (782 - 796) oder mittels Elektronenmikroskopie und anschließende Teilchenauszählung (G. Kämpf, H. Schuster, Angew. Makromolekulare Chemie 14, (1970), 111 - 129) oder mittels Lichtstreuungsmessungen.

Der hierin verwendete Begriff "an Abwesenheit von Suspendiermittel" bedeutet die Abwesenheit von Stoffen, die nach Art und Menge die Pfropfmonomeren (b) in der wäßrigen Phase suspendieren könnten. Diese Definition schließt die Anwesenheit von Stoffen nicht aus, die z.B. bei der Herstellung einer gepfropften Pfropfgrundlage (a) suspendiert gewirkt haben; in derartigen Fällen muß das Koagulations- oder Fällungsmittel, das zum Brechen des Latex (a) eingesetzt wird, in einer Menge zugesetzt werden, die die supendierende Wirkung der in der Vorstufe eingesetzten Stoffe kompensiert; mit anderen Worten: Erfindungsgemäß muß darauf geachtet werden, daß die Pfropfmonomeren (b) in der wäßrigen Phase keine (stabile) Emulsion ergeben.

Die erfindungsgemäßen Formmassen können übliche Additive, wie Gleit- und Entformungsmittel, Nukleierungsmittel, Stabilisatoren, Füll- und Verstärkungsstoffe, Flammschutzmittel sowie Farbstoffe enthalten.

Die gefüllten bzw. verstärkten Formmassen können bis zu 60 Gew.-%, bezogen auf die verstärkte Formmasse, Füllstoffe und/oder Verstärkungsstoffe, enthalten. Bevorzugte Verstärkungsstoffe sind Glasfasern. Bevorzugte Füllstoffe, die auch verstärkend wirken können, sind Glaskugeln, Glimmer, Silikate, Feldspat, Quarz, Talkum, Titandioxid, Wollastonit.

Die mit Flammschutzmitteln ausgerüsteten Formmassen enthalten Flammschutzmittel in einer Konzentration von im allgemeinen weniger als 30 Gew.-%, bezogen auf die flammgeschützten Formmassen.

Es kommen alle bekannten Flammschutzmittel in Frage, wie z.B. cyclische Chlorverbindungen, Melamin und dessen Salze, wie Melamincyanurat oder Melaminsulfat, roter Phosphor.

Die Herstellung der Mischungen aus Polyamid A und Pfropfkautschuk B kann in den üblichen Mischaggregaten, wie Walzen, Knetern, Ein- und Mehrwellenextrudern, erfolgen. Die Temperatur bei der Herstellung der Mischungen sollte mindestens 10°C und zweckmäßig höchstens 90°C oberhalb des Schmelzpunktes des Polyamids liegen.

Die erfindungsgemäßen Mischungen zeichnen sich schon bei niedrigen Gehalten an Pfropfpolymerisat B durch eine erhebliche Verbesserung der Schlagzähigkeit bei mehraxialer Belastung auch bei Verwendung von Polyamiden mit relativ niedrigem Molekulargewicht aus. Überraschend für die Mischungen ist auch die hohe Fließnahtfestigkeit. Darüber hinaus zeichnen sie sich durch eine hohe Wärmeformbeständigkeit und eine überraschend hohe Beständigkeit bei Alterung in heißer Luft aus.

Entsprechend diesem Eigenschaftsprofil können die erfindungsgemäßen Mischungen überall im Spritzguß und Extrusionssektor eingesetzt werden, wo hohe mehraxiale Zähigkeit in Kombination mit hoher Wärmeformbeständigkeit und Heißluftbeständigkeit gefordert wird, z.B. bei Geräteteilen im Motorraum von Kraftfahrzeugen und bei temperaturbelasteten Haushaltsgeräten.

In den nachfolgenden Beispielen genannte Teile sind Gewichtsteile; Prozentangaben beziehen sich auf das Gewicht.

Beispiele

1. Herstellung der Pfropfgrundlage (a)

1.1 Herstellung eines Polybutadienlatex

In einem Reaktor wird unter Rühren eine Emulsion folgender Zusammensetzung bei 65°C bis praktisch zum vollständigen Monomerumsatz innerhalb von ca. 22 Stunden polymerisiert.

| | |
|---|---|
| 100 | Teile Butadien |
| 1,8 | Teile Na-Salz der disproportioinierten Abietinsäure, |
| 0,257 | Teile Natriumhydroxid, |
| 0,3 | Teile n-Dodecylmercaptan, |
| 1,029 | Teile Na-Ethylendiamintetraacetat, |
| 0,023 | Teile Kaliumpersulfat und |
| 176 | Teile Wasser. |

Es wird ein Latex erhalten, der Polybutadienteilchen eines mittleren Durchmessers ($d_{50}$) von 0,1 $\mu$m in einer Konzentration von ca. 36 % enthält.

1.2 Herstellung von Acrylatkautschuk, der Polydienkerne enthält.

In einem Reaktor wird unter Rühren bei 63°C folgende Mischung vorgelegt:

| | |
|---|---|
| 200 | Teile Latex 1.1, |
| 5000 | Teile Wasser, |
| 14 | Teile Kaliumpersulfat, |
| 0,0124 | Teile Triallylcyanurat und |
| 399,09 | Teile n-Butylacrylat. |

Innerhalb von 5 Stunden werden bei 63°C folgende Mischungen in den Reaktor getrennt eindosiert:

Mischung 1:    90 Teile $C_{14}$-$C_{18}$-AlkylsulfonatNa und
11900 Teile Wasser.

Mischung 2:    23,09 Teile Triallylcyanurat und
10101 Teile n-Butylacrylat.

Anschließend läßt man 2 Stunden bei 65°C auspolymerisieren. Die gebildeten Polymerisate besitzen Gelgehalte von 85 - 95 % und mittlere Teilchendurchmesser ($d_{50}$) von 0,5 $\mu$m (Polymerisat-Gehalt im Latex: 38 %).

2. Herstellung der Pfropfpolymerisate B

2.1 Pfropfpolymerisat aus 80 % Acrylatkautschuk 1.2 und 20 % Methylmethacrylat

In einem Reaktor werden bei 70°C vorgelegt:

| | |
|---|---|
| 18800 | Teile Wasser und |
| 245 | Teile Bittersalz (MgSO$_4$ . xH$_2$O). |

Unter Rühren läßt man nun innerhalb von 2 Stunden 11200 Teile Latex 1.2 unter Rühren in den Reaktor einlaufen.

Nach Beendigung dieses Zulaufs wird 1 Teil Kaliumpersulfat in den Reaktor gegeben und anschließend werden 1276 Teile Methylmethacrylat in 1 Stunde gleichmäßig unter Rührung eindosiert. Anschließend rührt man die Aufschlämmung 1 Stunde bei 90°C. Das Polymerisat kann nun isoliert werden (Pfropfpolymerisat K).

3. Herstellung der Pfropfpolymerisate B, die Reste von sowohl in Emulsion als auch in Aufschlämmung gepfropften Monomeren (b) enthalten.

3.1 Herstellung der Emulsionspfropfpolymerisate

3.1.1 Emulsionpfropfpolymerisat aus 80 % Acrylatkautschuk 1.2 und 20 % Methylmethacrylat.

In einem Reaktor werden vorgelegt:

| | |
|---|---|
| 2926 | Teile Latex 1.2, |
| 1,5 | Teile Kaliumpersulfat und |
| 90 | Teile Wasser. |

Bei 65°C werden folgende Mischungen getrennt in den Reaktor eindosiert:

Mischung 1:    278 Teile Methylmethacrylat

Mischung 2:    150 Teile Wasser und
4 Teile $C_{14}$-$C_{18}$-Alkylsulfonat-Na.

Anschließend läßt man 4 Stunden bei 65°C auspolymerisieren (Pfropfpolymerisat L) (Polymerisat-

6

Gehalt im Latex: 37,8 %).

3.1.2 Emulsionspfropfpolymerisat aus 80 % Acrylatkautschuk 1.2 und 14,4 % Styrol und 5,6 % Acrylnitril

Beispiel 3.1.1 wird wiederholt, anstatt Methylmethacrylat wird eine Mischung aus 77 Teilen Acrylnitril und 201 Teilen Styrol als Mischung 1 eindosiert (Pfropfpolymerisat M).

3.2 Herstellung der Pfropfpolymerisate B aus den Emulsionspfropfpolymerisaten

3.2.1 Pfropfpolymerisat aus 70 % Acrylatkautschuk und 30 % Methylmethacrylat

In einem Reaktor werden bei 70° C vorgelegt:

   18800     Teile Wasser und

   240       Teile Bittersalz.

   Unter Rühren läßt man nun innerhalb von 2 Stunden 11200 Teile Latex 3.1.1 (Pfropfpolymerisat L) unter Rühren in den Reaktor einlaufen.

   Nach Beendigung des Zulaufs wird 1 Teil Kaliumpersulfat in den Reaktor gegeben; anschließend werden 529 Teile Methylmethacrylat in 1 Stunde gleichmäßig unter Rühren eindosiert. Anschließend rührt man die Aufschlämmung 1 Stunde bei 90° C. Dann wird das Polymerisat isoliert (Pfropfpolymerisat N).

3.2.2 Pfropfprodukt aus 70 % Acrylatkautschuk und 21,6 % Styrol und 8,4 % Acrylnitril

Beispiel 3.2.1 wird wiederholt. Anstelle von Latex 3.1.1 wird Latex 3.1.2 mit dem Pfropfpolymerisat M eingesetzt und anstelle von Methylmethacrylat wird eine Mischung aus

   148    Teilen Acrylnitril und

   381    Teilen Styrol

eingearbeitet (Pfropfpolymerisat O).

4. Herstellung von Vergleichs-Pfropfpolymerisaten

Pfropfpolymerisat, Typ NP

Copolymerisat aus einer Pfropfgrundlage aus

69,45 Teilen n-Butylacrylat,

0,35 Teilen 1,3-Butylendiacrylat und

0,28 Teilen Allylmethacrylat

und einer Pfropfhülle aus

19,95 Teilen Methylmethacrylat und

9,97 Teilen Allylmethacrylat

(nach DE-OS 2 726 256).

5. Herstellung der Mischungen

Auf einer kontinuierlich arbeitenden Zweiwellenmaschine der Fa. Werner u. Pfleiderer wurden folgende Polyamide aufgeschmolzen:

Typ Q:   Polyamid-6 mit einer relativen Viskosität (gemessen an einer 1 gew.-%igen Lösung in m-Kresol bei 25° C) von 3,5.

Typ R:   Polyamid-6,6 mit einer relativen Viskosität (gemessen an einer 1 gew.-%igen Lösung in m-Kresol bei 25° C) von 3,5.

Durch einen zweiten Einfüllstutzen wurde das Pfropfpolymerisat B unter Stickstoffatmosphäre in die Polyamid-Schmelze eindosiert und in der Schmelze homogen dispergiert. (Es kann vorteilhaft sein, die Schmelze vor dem Austritt aus der Düse zu entgasen.) Die Zylinder-Temperaturen wurden so gewählt, daß eine Massetemperatur von 275° C gewährleistet war. Der Schmelzstrang der erfindungsgemäßen Mischungen wurde in Wasser abgekühlt, granuliert und getrocknet. Vom Granulat wurden auf einer üblichen Spritzgußmaschine Normkleinstäbe (nach DIN 53 453) und Platten von 3 x 60 x 60 mm bei folgenden Formtemperaturen von 80° C verspritzt.

   Geprüft wurden die Schlagzähigkeit und Kerbschlagzähigkeit (nach DIN 53 543), Kugeldruckhärte (nach DIN 53 456), Wärmeformbeständigkeit nach Vicat (nach DIN 53 460) sowie die Schlagzähigkeit bei mehraxialer Belastung im EKWA-Test (nach DIN 53 443, Blatt 2, Durchschlagung einer Platte von 3 x 60 x 60 mm mit einem Gewicht von 35 kg mit einem Durchstoßdorn mit kugelförmiger Spitze, Durchmesser 20 mm, bei einer Fallhöhe von 1 m). Die Fließnahtfestigkeit wurde im Zugversuch (nach DIN 53 455) an zweiseitig angespritzten Zugstäben geprüft. Die Ergebnisse sind in der Tabelle zusammengefaßt.

Tabelle 1:

| Bsp. | Polyamid Typ | (%) | Pfropfpoly-merisat Typ | (%) | $a_K$[1] (kJ/m²) | $H_C$[2] (MPa) | Vicat B (°C) | EKWA[3]-Test (W sec) | Zahl der Zäh-brüche (%) |
|---|---|---|---|---|---|---|---|---|---|
| 1 | Beispiel 1 ist gestrichen. | | | | | | | | |
| 2 | Q | 90 | N | 10 | 8,2 | 110 | 180 | 120 | 100 |
| 3 | Q | 95 | K | 5 | 3,0 | 118 | 185 | 100 | 90 |
| 4 | Q | 97 | N | 3 | 3,5 | 123 | 188 | | 95 |
| 6 | Q | 80 | N | 20 | 35 | 85 | 170 | | 100 |
| 7 | Q | 70 | N | 30 | n.g.[4] | 60 | 160 | | 100 |
| 8 | R | 95 | N | 5 | 3,0 | 135 | 190 | | 100 |
| 9 | R | 97 | N | 3 | 2,6 | 140 | 195 | | 97 |
| Vergleichsbeispiele | | | | | | | | | |
| 10 | Q | 100 | - | - | - | 130 | 200 | 20 | 0 |
| 11 | Q | 95 | NP | 5 | 2,6 | 118 | 183 | 45 | 30 |
| 12 | R | 95 | NP | 5 | 2,6 | 140 | 192 | 40 | 20 |

Der Schlagzähigkeitstest ergab für alle Proben aller Beispiele das Ergebnis "nicht gebrochen". Die Fließnahtfestigkeit[5] für alle Proben lag bei 100 %.

1) Kerbschlagzähigkeit
2) Kugeldruckhärte
3) EKWA: Elektronische Kraft/Weg-Aufnahme
4) "nicht gebrochen"
5) Reißfestigkeit mit Fließnaht x 100

  Reißfestigkeit ohne Fließnaht

**Patentansprüche**

1. Verfahren zur Herstellung von Polyamidformmassen verbesserter Verarbeitungsstabilität durch Vermischen von

A) 55 bis 99 Gew.-%, bezogen auf die Summe der Komponenten A und B, Polyamid und

B) 1 bis 45 Gew.-%, bezogen auf die Summe der Komponenten A und B, eines pulverförmigen Pfropfpolymerisats aus

a) 60 bis 98 Gew.-%, bezogen auf B, Acrylatkautschuk aus einem Polydien-Kern und aufgepfropf-

EP 0 176 011 B1

ten Acrylateinheiten, mit einer Glastemperatur <0° C als Pfropfgrundlage und

b) 2 bis 40 Gew.-%, bezogen auf B, mindestens eines ethylenisch ungesättigten Monomeren, dessen bzw. deren in Abwesenheit von a) entstandenen Homo- bzw. Copolymerisate eine Glasübergangstemperatur >25° C aufweisen, als Pfropfmonomere,

und

C) übliche Additive, wie Gleit- und Entformungsmittel, Nuclierungsmittel, Stabilisatoren, Füll- und Verstärkungsstoffe, Flammschutzmittel sowie Farbstoffe,

wobei das Pfropfpolymerisat B) durch Aufpropfen der Pfropfmonomeren b) auf den aus Emulsion durch Elektrolyte, Säuren, Basen, Temperatur oder mechanische Einwirkung vollständig gebrochenen bzw. koagulierten und in Wasser aufgeschlämmten Latex von a) in Abwesenheit von Suspendiermitteln hergestellt wurde, und die mittlere Teilchengröße $d_{50}$ des Pfropfpolymerisats B) in dem Polyamid A 0,05 bis 3 $\mu$m beträgt,

und wobei eine Mischung von Acrylatkautschuk-Latexteilchen a) unterschiedlich hergestellter Latices mit definierter bimodaler Latexgrößenverteilungen, aus

$\alpha$) 20 - 80 Gew.-%, bezogen auf die Summe ($\alpha + \beta$),eines Kautschuklatex mit einem Teilchendurchmesser $d_{50}$ von 0,05 - 0,19 $\mu$m und

$\beta$) 80 - 20 Gew.%, bezogen auf die Summe ($\alpha + \beta$), eines Kautschuklatex mit einem Teilchendurchmesser $d_{50}$ von 0,20 - 1,0 $\mu$m, mit der Maßgabe, daß $d_{50}$ ($\beta$) um den Faktor 1,5-8 größer ist als $d_{50}$ ($\alpha$),

der Quotient Q = ($d_{90}$-$d_{10}$)/$d_{50}$ der einzelnen Kautschuke jeweils höchstens 2 und die Differenz $d_{10}$ ($\beta$) - $d_{90}$ ($\alpha$) 0,01 - 0,10 betragen,

ausgeschlossen wird.

2. Verfahren nach Anspruch 1, dadurch gekennzeichnet, daß der Acrylatkautschuk Ba) aus wenigstens 20 Gew.-% Acrylateinheiten besteht und aus folgender Gruppe ausgewählt wird:

1. Polyacrylsäureester-homo- und -copolymerisate, die einen Dienkautschukkern enthalten,

2. in wäßriger Emulsion hergestellte Pfropfpolymerisate aus Polyacrylsäureester-homo- oder -copolymerisaten, die einen Dienkautschukkern enthalten, und ethylenisch ungesättigten polymerisierbaren Monomeren.

3. Verfahren nach Ansprüchen 1 und 2, wobei in der Kautschuk-Pfropfgrundlage Ba) der Anteil des Polydien-Kerns 0,1 bis 80 Gew.-% bezogen auf a) beträgt.

4. Verfahren nach Anspruch 3, wobei in der Kautschuk-Pfropfgrundlage Ba) der Anteil des Polydien-Kerns 10 bis 50 Gew.-% bezogen auf a) beträgt.

5. Verfahren nach Ansprüchen 1 bis 4, bei der als Pfropfmonomere Bb) $\alpha$-Methylstyrol, Styrol, Acrylnitril, Methylmethacrylat oder Mischungen dieser Monomeren eingesetzt werden.

6. Verfahren nach Ansprüchen 1 bis 5, bei der als Pfropfmonomere Bb) Mischungen aus Styrol und Acrylnitril im Gewichtsverhältnis 90:10 bis 50:50 oder Methylmethacrylat eingesetzt werden.

7. Verfahren nach Ansprüchen 1 bis 6, bei der die Pfropfpolymerisatkomponente B) aus
70 bis 95 Gew.-% Pfropfgrundlage a) und
5 bis 30 Gew.-% aufzupfropfenden Monomeren b)
hergestellt wurden und
die mittlere Teilchengröße des Pfropfpolymerisats B) 0,1 bis 2 $\mu$m beträgt.

8. Verfahren nach Ansprüchen 1 bis 7, bei der das vollständige Brechen der Latexemulsion a) mit wäßrigen Lösungen von Säuren und/oder Salzen bei 30 bis 100 ° C erfolgt.

9. Verfahren nach Ansprüchen 1 bis 8, bei der 75 bis
97 Gew.-% der Polyamidkomponente A) und 3 bis
25 Gew.-% der Pfropfpolymerisat-Komponente B)
vermischt werden.

9

EP 0 176 011 B1

**10.** Verfahren nach Ansprüchen 1 bis 9, bei dar als Polyamid A) Polyamid-6, Polyamid-6,6 und entsprechende Copolyamide verwendet werden und in der Mischung die mittlere Teilchengröße des Pfropfpolymerisats B) im Polyamid A) 0,05 bis 3 $\mu$m beträgt.

**Claims**

**1.** A process for the production of polyamide molding compounds having improved processing stability by mixing of

A) 55 to 99% by weight, based on the sum of components A and B, polyamide and

B) 1 to 45% by weight, based on the sum of components A and B, of a powder-form graft polymer of

a) 60 to 98% by weight, based on B, of an acrylate rubber of a polydiene core and grafted-on acrylate units having a glass temperature of $<0^\circ$ C as the graft base and

b) 2 to 40% by weight, based on B, of at least one ethylenically unsaturated monomer of which the homo- or copolymer(s) formed in the absence of a) has/have a glass transition temperature of $>25^\circ$ C as the graft monomer

and

C) typical additives, such as lubricants and mold release agents, nucleating agents, stabilizers, fillers and reinforcing materials, flameproofing agents and dyes,

the graft polymer B) being obtained by grafting of the graft monomers b) onto a latex of a) completely broken from emulsion or coagulated by electrolytes, acids, bases, temperature or mechanical action and suspended in water in the absence of suspending agents and the average particle size $d_{50}$ of the graft polymer B) in the polyamide A being from 0.05 to 3 $\mu$m,

and a mixture of acrylate rubber latex particles a) of differently prepared latices having defined bimodal latex particle size distributions of

$\alpha$) 20 to 80% by weight, based on the sum of ($\alpha + \beta$), of a rubber latex having a particle diameter $d_{50}$ of 0.05 to 0.19 $\mu$m and

$\beta$) 80 to 20% by weight, based on the sum of ($\alpha + \beta$), of a rubber latex having a particle diameter $d_{50}$ of 0.20 to 1.0 $\mu$m, with the proviso that $d_{50}$ ($\beta$) is greater by a factor of 1.5 to 8 than $d_{50}$ ($\alpha$), the quotient $Q = (d_{90}-d_{10})/d_{50}$ of the individual rubbers being at most 2 and the difference $d_{10}$ ($\beta$) - $d_{90}$ ($\alpha$) being from 0.01 to 0.10,

being excluded.

**2.** A process as claimed in claim 1, characterized in that the acrylate rubber Ba) consists of at least 20% by weight acrylate units and is selected from the following group

1. polyacrylate homopolymers and copolymers containing a diene rubber core,

2. graft polymers - prepared in aqueous emulsion - of polyacrylate homopolymers or copolymers, which contain a diene rubber core, and ethylenically unsaturated polymerizable monomers.

**3.** A process as claimed in claims 1 and 2, the percentage content of the polydiene core in the rubber graft base Ba) being from 0.1 to 80% by weight, based on a).

**4.** A process as claimed in claim 3, the percentage content of the polydiene core in the rubber graft base Ba) being from 10 to 50% by weight, based on a).

**5.** A process as claimed in claims 1 to 4, in which $\alpha$-methyl styrene, styrene, acrylonitrile, methyl methacrylate or mixtures of these monomers are used as the graft monomer Bb).

**6.** A process as claimed in claims 1 to 5, in which mixtures of styrene and acrylonitrile in a ratio by weight of 90:10 to 50:50 or methyl methacrylate are/is used as the graft monomer Bb).

**7.** A process as claimed in claims 1 to 6, in which the graft polymer component B) is prepared from
70 to 95% by weight of the graft base a) and
5 to 30% by weight monomers b) to be grafted on
and the average particle size of the graft polymer B) is from 0.1 to 2 $\mu$m.

**8.** A process as claimed in claims 1 to 7, in which the latex emulsion a) is completely broken with aqueous solutions of acids and/or salts at 30 to 100$^\circ$ C.

10

**9.** A process as claimed in claims 1 to 8, in which 75 to 97% by weight of the polyamide component A) and 3 to 25% by weight of the graft polymer component B) are mixed.

**10.** A process as claimed in claims 1 to 9, in which polyamide 6, polyamide 6,6 and corresponding copolyamides are used as the polyamide A) and, in the mixture, the average particle size of the graft polymer B) in the polyamide A) is from 0.05 to 3 $\mu$m.

**Revendications**

**1.** Procédé pour la préparation de matières à mouler en polyamide présentant une stabilité améliorée au traitement, en mélangeant

A) de 55 à 99% en poids, rapportés à la somme des composants A et B, d'un polyamide et

B) de 1 à 45% en poids, rapportés à la somme des composants A et B, d'un polymère greffé pulvérulent comprenant

a) de 60 à 98% en poids, rapportés à B, d'un caoutchouc acrylate comprenant un noyau polydiénique, ainsi que des unités acrylate greffées sur ce dernier, possédant une température de transition vitreuse < 0° C, comme substrat de greffage et

b) de 2 à 40% en poids, rapportés à B, d'au moins un monomère à insaturation éthylénique dont les homo- ou copolymères obtenus présentent, en l'absence de a), une température de transition vitreuse > à 25° C, comme monomères greffés

et

C) des additifs habituels tels que des agents de glissement et de démoulage, des agents de nucléation, des stabilisants, des matières de charge et de renforcement, des agents de protection contre les flammes, ainsi que des colorants,

le polymère greffé B) ayant été préparé en l'absence d'agents de mise en suspension par greffage du monomère de greffage b) sur le latex de a) complètement fractionné ou coagulé à partir d'une émulsion, à l'intervention d'électrolytes, d'acides, de bases, de température ou par incorporation mécanique, et mis en suspension dans de l'eau, la granulométrie moyenne $d_{50}$ du polymère greffé B) dans le polyamide A étant de l'ordre de 0,05 à 3 $\mu$m,

un mélange de particules de latex de caoutchouc acrylate a) de latex préparé de manière différente, qui possèdent des répartitions dimensionnelles bimodales de latex définies, constitué par

$\alpha$) de 20 à 80% en poids, rapportés à la somme ($\alpha + \beta$) d'un latex de caoutchouc avec un diamètre de particules $d_{50}$ de 0,05-0,19 $\mu$m et

$\beta$) de 80 à 20% en poids, rapportés à la somme ($\alpha + \beta$) d'un latex de caoutchouc avec un diamètre de particules $d_{50}$ de 0,20 -1,0 $\mu$m, avec cette mesure que $d_{50}$ ($\beta$) est supérieur à $d_{50}$ - ($\alpha$) d'un facteur de 1,5-8,

le quotient Q = ($d_{90}$-$d_{10}$)/$d_{50}$ des caoutchoucs individuels étant chaque fois égal au maximum à 2

et la différence $d_{10}$ ($\beta$) - $d_{90}$ ($\alpha$) étant égale à 0,01-0,10

étant exclu.

**2.** Procédé selon la revendication 1, **caractérisé en ce que** le caoutchouc acrylate Ba) est constitué par au moins 20% en poids d'unités acrylate et est choisi parmi le groupe ci-après :

1. des homo- et copolymères d'esters polyacryliques, qui contiennent un noyau de caoutchouc diénique,

2. des polymères greffés, préparés en émulsion aqueuse à partir d'homo- ou de copolymères d'esters polyacryliques, qui contiennent un noyau de caoutchouc diénique, et de monomères polymérisables à insaturation éthylénique.

**3.** Procédé selon les revendications 1 et 2, dans lequel, dans le substrat de greffage de caoutchouc Ba), la fraction du noyau polydiénique s'élève de 0,1 à 80% en poids, rapportés à a).

**4.** Procédé selon la revendication 3, dans lequel, dans le substrat de greffage de caoutchouc Ba), la fraction du noyau polydiénique s'élève de 10 à 50% en poids, rapportés à a).

5. Procédé selon les revendications 1 à 4, dans lequel, comme monomères de greffage Bb), on met en oeuvre l'α-méthylstyrène, le styrène, l'acrylonitrile, le méthacrylate de méthyle ou encore des mélanges des ces monomères.

6. Procédé selon les revendications 1 à 5, dans lequel, comme monomères de greffage Bb), on met en oeuvre des mélanges de styrène et d'acrylonitrile dans un rapport pondéral de 90:10 à 50:50 ou encore du méthacrylate de méthyle.

7. Procédé selon les revendications 1 à 6, dans lequel on prépare le composant B) du polymère greffé à partir de 70 à 95% en poids de substrat de greffage a) et de 5 à 30% en poids de monomères b) à greffer, la granulométrie moyenne du polymère greffé B) s'élevant de 0,1 à 2 $\mu$m.

8. Procédé selon les revendications 1 à 7, dans lequel, le fractionnement complet de l'émulsion de latex a) a lieu avec des solutions aqueuses d'acides et/ou de sels à une température de 30 à 100˚C.

9. Procédé selon les revendications 1 à 8, dans lequel on mélange de 75 à 97% en poids du composant de polyamide A) et de 3 à 25% en poids du composant de polymère greffé B).

10. Procédé selon les revendications 1 à 9, dans lequel, comme polyamide A, on utilise le polyamide-6, le polyamide-6,6, ainsi que les copolyamides correspondants et, dans le mélange, la granulométrie moyenne du polymère greffé B) dans le polyamide A) s'élève de 0,05 à 3 $\mu$m.